# EUROPÄISCHE PATENTANMELDUNG

(11) **EP 3 459 612 A1**
(43) Veröffentlichungstag der Anmeldung: **27.03.2019**
(21) Anmeldenummer: 17192620.7
(22) Anmeldetag: 22.09.2017
(51) Int. Cl.: B01D 45/08, F01D 25/32, F22B 37/30

(54) **DAMPFSIEB FÜR EIN DAMPFVENTIL**

(71) Anmelder: Siemens Aktiengesellschaft, 80333 München (DE)
(72) Erfinder: Bell, Ralf, 45478 Mülheim an der Ruhr (DE); Bergmann, Anett, 45527 Hattingen (DE); Bieniakonski, Christoph, 45128 Essen (DE); Busschulte, Marius, 46562 Voerde (DE); Ernst, Stephan, 46537 Dinslaken (DE); Kocdemir, Bora, 45357 Essen (DE); Legenbauer, Markus, 45279 Essen (DE); Maguire, Adam, 46147 Oberhausen (DE); Oehmichen, Michael, 45478 Mülheim an der Ruhr (DE); Ostwald, Daniel, 46047 Oberhausen (DE); Stanka, Ulrich, 45355 Essen (DE); Ulma, Andreas, 45481 Mülheim an der Ruhr (DE); van der Lest, Niclas, 45147 Essen (DE)

(57) **Zusammenfassung**

Die Erfindung betrifft ein Dampfsieb (8) mit einer Vielzahl von Sieböffnungen, wobei das Dampfsieb (8) innerhalb eines Ventilgehäuses (2) sowohl in Umfangsrichtung (13) als auch in einer Längsrichtung (18) wellenförmig durch 3D-Druck ausgebildet wird, wobei das Dampfsieb (8) aus einzelnen Segmenten (22) gefertigt wird.

## Beschreibung

Die Erfindung betrifft ein Dampfsieb mit einer Vielzahl von Sieböffnungen zum Durchtritt von Dampf, die in einem die Siebfläche definierenden Siebmantel des Dampfsiebes ausgebildet sind, wobei die Gestalt der Siebfläche von einer idealen Zylinder- bzw. Konusform abweicht, wobei das Dampfsieb ferner einen Einströmbereich aufweist, der zum Anströmen eines Einströmdampfes ausgebildet ist, wobei der Einströmdampf aus einer Einströmrichtung auf den Einströmbereich trifft, wobei der Siebmantel in einer Längsrichtung ausgebildet ist.

Desweiteren betrifft die Erfindung ein Verfahren zur Herstellung eines solchen Dampfsiebes.

Dampfsiebe werden beispielsweise in Ventilen in Dampfkraftwerken eingesetzt, wobei es vielfältige Ausführungen gibt, die im Stand der Technik bekannt sind. Anwendungen von Dampfsieben finden sich beispielsweise in Dampfströmungspassagen von Dampfturbinenanlagen, um in der betreffenden Dampfströmungspassage unerwünschte Fremdkörper abzufangen, so dass stromabwärts des Dampfsiebes nachfolgende Anlagenkomponenten vor Beschädigungen geschützt sind. Allerdings ist es bei den derzeitigen Dampfsieben nachteilig, dass eine Vergrößerung des Strömungswiderstandes der betreffenden Dampfströmungspassage einhergeht. Dadurch entsteht ein entsprechender Druckverlust infolge des Strömungswiderstandes, was zu einer Verringerung des Wirkungsgrades des Gesamtsystems führt.

Ein weiteres Problem beim Einsatz von Dampfsieben besteht darin, dass diese oftmals hohen Belastungen (zum Beispiel Schwingungsbelastungen oder Temperaturschwankungen) ausgesetzt sind, welche das Dampfsieb nach einer relativ kurzen Einsatzzeit schädigen oder sogar zerstören können.

In einem Schadensfall ist oftmals ein ganzheitlicher Ersatz von Dampfsieben erforderlich, was allerdings eine Erhöhung der Kosten und einer Erhöhung der Beschaffungszeit zur Folge hat.

Es wurde erkannt, dass Optimierungen möglich sind hinsichtlich Durchströmbarkeit und Strömungsführung. Allerdings ist die Umsetzbarkeit von besseren Strömungsführungen im Dampfsieb durch die eingeschränkte Umsetzbarkeit mittels traditioneller Fertigungsmethoden nicht möglich. Darüber hinaus ist das Strömungsverhalten in den Bereichen, wo die Dampfsiebe eingesetzt werden, sehr komplex, so dass in manchen Bereichen der Dampfsieboberfläche eine höhere Belastung und / oder ein anderer Anströmwinkel vorherrscht. Dies führt ebenfalls zu einer erhöhten Schadensbelastung.

Es ist bekannt, Dampfsiebe aus einem Zylinder zu fertigen, wobei Bohrungen auf der Oberfläche angeordnet werden. Bei einem anderen Design werden schmale teils gewellte Blechstreifen verwendet, um eine Siebfläche auszubilden.

Gelöst wird diese Aufgabe durch ein Dampfsieb mit einer Vielzahl von Sieböffnungen zum Durchtritt von Dampf, die in einem die Siebfläche definierenden Siebmantel des Dampfsiebes ausgebildet sind, wobei der Siebmantel eine über die Siebfläche betrachtet variierende Dicke besitzt, wobei das Dampfsieb ferner einen Einströmbereich aufweist, der zum Anströmen eines Einströmdampfes ausgebildet ist, wobei der Einströmdampf aus einer Einströmrichtung auf den Einströmbereich trifft, wobei der Siebmantel im Bereich des Einströmbereiches verdickt ausgeführt ist.

Aufgabe der Erfindung ist, ein Dampfsieb anzugeben, mit einer verbesserten Strömungsführung.

Gelöst wird diese Aufgabe durch ein Dampfsieb mit einer Vielzahl von Sieböffnungen zum Durchtritt von Dampf, die in einem die Siebfläche definierenden Siebmantel des Dampfsiebes ausgebildet sind, wobei die Gestalt der Siebfläche von einer idealen Zylinder- bzw. Konusform abweicht, wobei das Dampfsieb ferner einen Einströmbereich aufweist, der zum Anströmen eines Einströmdampfes ausgebildet ist, wobei der Einströmdampf aus einer Einströmrichtung auf den Einströmbereich trifft, wobei der Siebmantel in einer Längsrichtung ausgebildet ist, wobei der Siebmantel wellenförmig ausgebildet ist.

Mit der Erfindung wird das Ziel verfolgt, durch eine stern- bzw. wellenförmige Gestaltung des Dampfsiebes die angeströmte Oberfläche zu vergrößern. Dadurch lassen sich die Druckverluste durch das Dampfsieb minimieren. Die Erfindung führt ebenfalls zu einer Vergleichmäßigung der Strömung durch die optimierte Anordnung und Gestaltung der Strömungskanäle in der vergrößerten Oberfläche. Die Anordnung der Wellenform beschränkt sich nicht nur auf die radiale Ausrichtung. Auch in axialer Ausrichtung kann die Wellenform ausgeführt werden, so dass sich die vergrößerte Dampfsieboberfläche nach dem Strömungsverhalten im Dampfraum optimieren lässt.

Durch die Möglichkeit, die Druckverluste über das Dampfsieb zu reduzieren, steigt der Wirkungsgrad der betriebenen Anlage. Mit den reduzierten Druckverlusten sinkt auch die Energieumsetzung innerhalb des Dampfsiebes, somit wird der Anteil an mechanischer Bewegungsenergie im Dampfsieb geringer, was zu reduziertem Verschleiß bzw. reduzierter mechanischer Belastung des Dampfsiebes führt.

Vorteilhafte Weiterbildungen sind in den Unteransprüchen angegeben.

So ist in einer ersten vorteilhaften Weiterbildung der Siebmantel im Einströmbereich derart ausgebildet, dass sich dort ein Wellenberg befindet. Dadurch lässt sich der einströmende Dampf besser in einen ersten Teilstrom und einen zweiten Teilstrom aufteilen.

Vorteilhafterweise ist der Siebmantel im Querschnitt gesehen sternförmig ausgebildet.

Der sternförmige Siebmantel weist hierbei im Einströmbereich einen Wellenberg auf.

In einer weiteren vorteilhaften Weiterbildung sind in Umfangsrichtung des Siebmantels gesehen zumindest sechs Wellenberge ausgebildet.

In einer weiteren vorteilhaften Weiterbildung ist der Siebmantel aus einzelnen Segmenten ausgebildet. Dadurch ist es möglich, den Aufbau des Dampfsiebes kostengünstiger und zeitsparender zu gestalten. In den einzelnen Segmenten sind die Sieböffnungen angeordnet. Der Siebmantel wird hierbei durch die einzelnen Segmente zusammengebaut. In einer vorteilhaften Weiterbildung sind die Segmente im Wesentlichen T-förmig ausgebildet und werden so in Umfangsrichtung angeordnet, dass die T-förmigen Segmente alternierend zueinander montiert werden. Dazu weist das Segment eine Grundseite und ein T-Bein auf, wobei die Segmente derart angeordnet werden, dass das T-Bein der jeweiligen Segmente abwechselnd in einer alternierende Richtung zeigt.

Vorteilhafterweise wird in den Grundseiten der Segmente jeweils eine Bohrung ausgeführt, durch die ein Verbindungselement angeordnet ist. Das Verbindungselement kann vorteilhafterweise eine Stange sein.

In einer weiteren vorteilhaften Weiterbildung wird der Siebmantel durch eine Grundplatte und eine Abschlussplatte gehalten, wobei das Verbindungselement mit der Abschlussplatte und der Grundplatte fest verbunden ist.

Die auf das Verfahren hin gerichtete Aufgabe wird dadurch gelöst, dass das Dampfsieb durch Additive Manufacturing hergestellt wird.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Ausführungsbeispiele der Erfindung werden nachfolgend anhand der Zeichnungen beschrieben. Diese sollen die Ausführungsbeispiele nicht maßgeblich darstellen, vielmehr ist die Zeichnung, wo zu Erläuterung dienlich, in schematisierter und / oder leicht verzerrter Form ausgeführt. Im Hinblick auf Ergänzungen der in der Zeichnung unmittelbar erkennbaren Lehren wird auf den einschlägigen Stand der Technik verwiesen.

Gleiche Bauteile oder Bauteile mit gleicher Funktion sind dabei mit gleichen Bezugszeichen gekennzeichnet.

Es zeigen
- Figur 1: eine Seitenansicht eines Dampfventils
- Figur 2: eine Draufsicht auf ein erfindungsgemäßes Dampfsieb
- Figur 3: eine Seitenansicht eines erfindungsemäßen Siebmantels
- Figur 4: eine perspektivische Ansicht eines Segmentes
- Figur 5: eine Draufsicht auf ein Segment
- Figur 6: eine Schnittdarstellung A-A aus Figur 5
- Figur 7: eine Seitenansicht eines erfindungsgemäßen Siebmantels

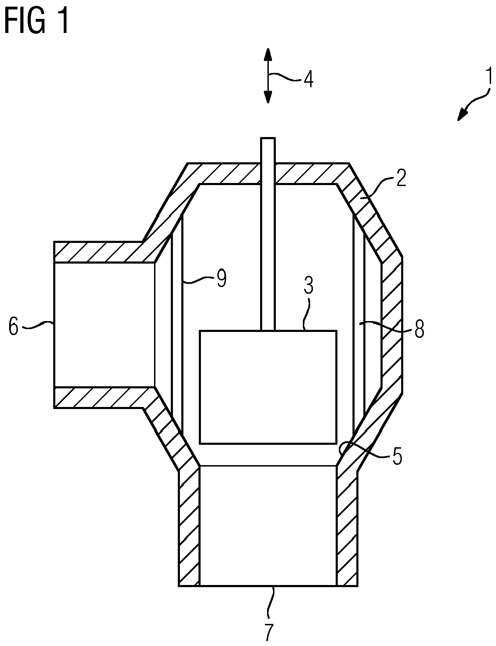

Die Figur 1 zeigt eine Seitenansicht eines Dampfventils 1. Das Dampfventil 1 wird beispielsweise in Dampfkraftanlagen eingesetzt und umfasst im Wesentlichen ein Ventilgehäuse 2 und einen verschiebbar angeordneten Ventilkegel 3. Der Ventilkegel 3 ist hierbei in einer Längsrichtung 4 verschiebbar angeordnet. Sofern der Ventilkegel 3 in einer oberen Stellung angeordnet ist, ist das Ventil 1 komplett geöffnet. Wenn der Ventilkegel 3 ganz unten am Ventilsitz 5 anliegt, ist das Ventil 1 komplett geschlossen. Das Ventil 1 schafft eine strömungstechnische Verbindung zwischen einem Dampfeinlass 6 und einem Dampfauslass 7. Die Strömungsrichtung des in den Dampfeinlass einströmenden Dampfes wird hierbei um 90 Grad zum Dampfauslass 7 umgelenkt. Um den Ventilkegel 3 ist ein Dampfsieb 8 angeordnet. Das Dampfsieb 8 verhindert, dass größere Fremdpartikel aus dem Dampfeinlass 6 zum Dampfauslass 7 gelangen. Dazu umfasst das Dampfsieb einen Siebmantel 9, der eine Vielzahl von Sieböffnungen (nicht dargestellt) zum Durchtritt von Dampf aufweist. Die Gestalt der Siebfläche weicht von einer idealen Zylinder- bzw. Konusform ab.

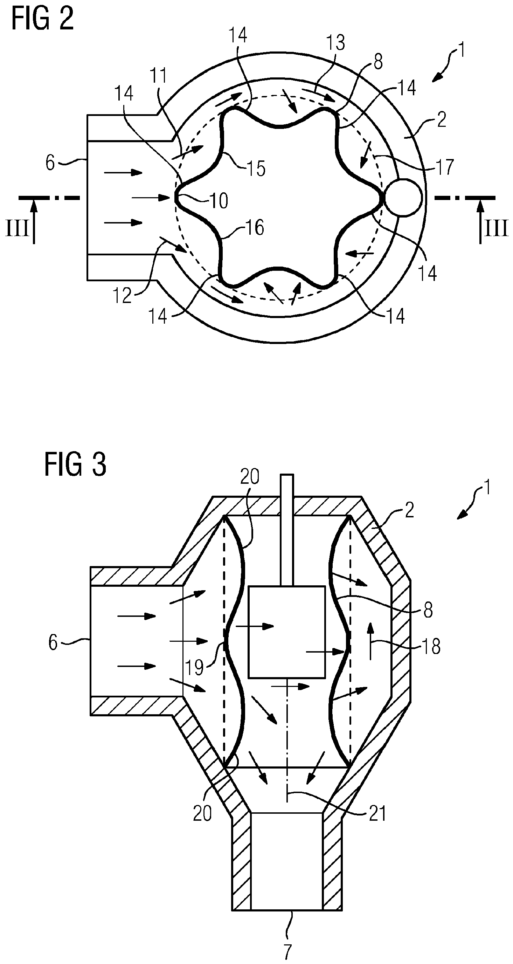

Die Figur 2 zeigt eine Draufsicht auf ein erfindungsgemäßes Ventil 1. Der Dampf strömt am Dampfeinlass 6 in das Dampfventil 1 ein und wird an einem Einströmbereich 10 des Dampfsiebes 8 in einem ersten Teilstrom 11 und einem zweiten Teilstrom 12 umgeleitet. Das Dampfsieb 8 ist innerhalb des Ventilgehäuses 2 angeordnet. In einer Umfangsrichtung 13, die im Wesentlichen dem Ventilgehäuse 2 folgt, ist das Dampfsieb 8 wellenförmig ausgebildet. Dabei weist im Einströmbereich 10 - dort wo der Dampf zuerst auf das Dampfsieb 8 trifft - auf einen Wellenberg 14. Das Dampfsieb 8 weist nach dem Wellenberg 14 ein Wellental 15 im Bereich des ersten Teilstromes 11 auf und ein weiteres Wellental 16 im Bereich des zweiten Teilstromes 12. Den Wellentälern 15 und 16 folgen wiederum in der Umfangsrichtung 13 Wellenberge. Der Siebmantel 8 ist im Querschnitt gesehen sternförmig ausgebildet. In Umfangsrichtung 13 des Siebmantels 8 gesehen sind zumindest 6 Wellenberge ausgebildet. Zur Verdeutlichung ist in der Figur 2 ein idealer Kreis 17 dargestellt, der den Unterschied des idealen Kreises 17 zum wellenförmigen Wellensieb 8 darstellen soll.

Die Figur 3 zeigt eine Seitenansicht des erfindungsgemäßen Dampfsiebes 8.

Das Dampfsieb 8 ist in einer Längsrichtung 18 ausgebildet und in dieser Längsrichtung 18 wellenförmig gefertigt. Das bedeutet, dass im Einströmbereich 10 das Dampfsieb 8 ein Wellenberg 19 und oberhalb und unterhalb ein Wellental 20 aufweist.

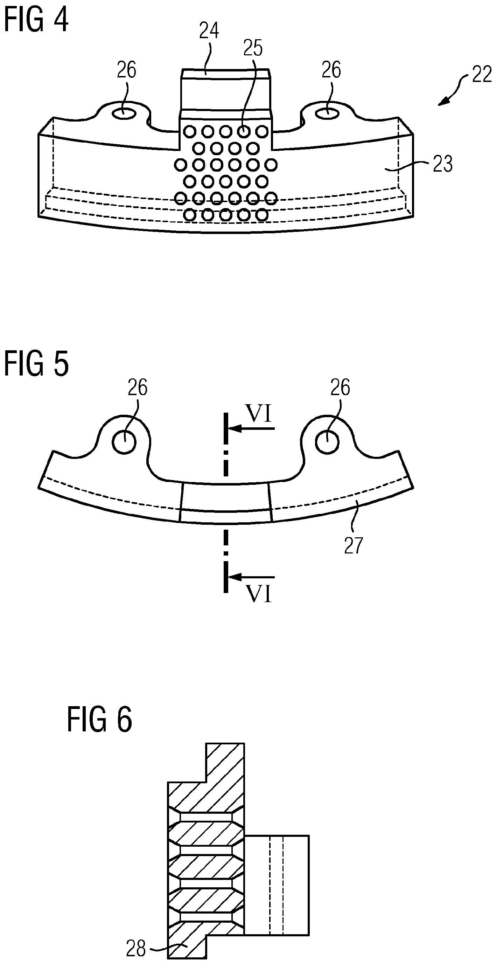

Die Figur 4 zeigt ein Segment 22, mit dem das Dampfsieb 8 ausgebildet werden kann. Das Segment 22 ist T-förmig ausgebildet, wobei das Segment eine Grundseite 23 und ein T-Bein 24 aufweist. Im Bereich des T-Beins sind mehrere Sieböffnungen 25 ausgebildet. Auf jeweils einer Grundseite 23 ist eine Bohrung 26 ausgeführt.

Die Figur 5 zeigt eine Draufsicht auf das Segment 22. Das Segment 22 ist wie in Figur 5 zu sehen ist, in etwa bogenförmig ausgeführt. Desweiteren weist das Segment eine erste Kante 27 und eine zweite Kante 28 auf.

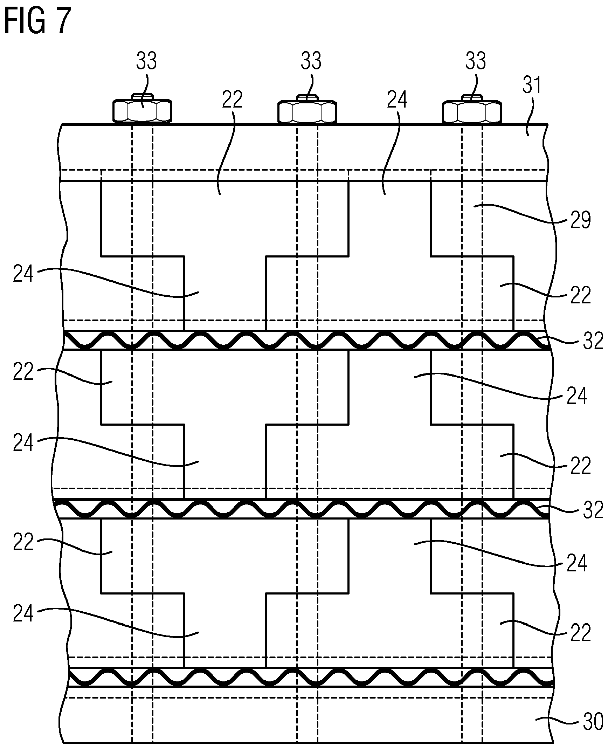

Die Figur 7 zeigt mehrere Segmente zusammengefügt, die einen Teil eines Dampfsiebes 8 darstellen. Wie in Figur 7 zu sehen ist, wird durch die Bohrung 26 eine Stange 29 geführt, die an einer Grundplatte 30 und an einer Abschlussplatte 31 endet. Die Stange 29 wird mit der Grundplatte 30 und mit der Abschussplatte 31 fest verbunden, so dass die Segmente 22 in der Stangenrichtung 32 fest miteinander verbunden sind. Die Segmente 22 werden abwechselnd nebeneinander und übereinander so angeordnet, dass die Richtung der T-Beine alternierend ist. Zwischen einer Lage von alternierend zueinander angeordneten Segmenten 22 wird zur weiteren Befestigung ein Federelement 32 angeordnet. Die Stange 29 könnte als Gewindestange ausgebildet sein und wird mittels einer Mutter 33 ausgebildet.

Durch die stern- bzw. wellenförmige Gestaltung des Dampfsiebes 8 wird die angeströmte Oberfläche vergrößert. Die Wellenform des Dampfsiebes 8 ist mittels der Additive-Manufacturing-Methode (3-D-Druck) möglich. Die Druckverluste durch das Dampfsieb 8 lassen sich dadurch minimieren.

Die Stange 29 wird mit der Grundplatte 30 fest verbunden. Anschließend können die einzelnen Segmente 22 über die Stange 29 nacheinander aufgeschoben bzw. montiert werden. Die Segmentreihen werden durch Federelemente 32 getrennt, um eine axiale Vorspannung der einzelnen Segmentreihen zueinander zu erreichen. Jedes Segment 22 kann über zwei oder mehr Stangen reichen und zusätzlich in einer Nut in der Grundplatte geführt werden, um einen radialen Sitz zu garantieren.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Dampfsieb (8)
mit einer Vielzahl von Sieböffnungen zum Durchtritt von Dampf, die in einem die Siebfläche definierenden Siebmantel (9) des Dampfsiebes (8) ausgebildet sind,
wobei die Gestalt der Siebfläche von einer idealen Zylinder- bzw. Konusform abweicht,
wobei das Dampfsieb (8) ferner einen Einströmbereich (10) aufweist, der zum Anströmen eines Einströmdampfes ausgebildet ist, wobei der Einströmdampf aus einer Einströmrichtung auf den Einströmbereich trifft,
wobei der Siebmantel in einer Längsrichtung ausgebildet ist,
**dadurch gekennzeichnet, dass**
der Siebmantel (9) wellenförmig ausgebildet ist.

2. Dampfsieb nach Anspruch 1,
wobei der Siebmantel im Einströmbereich einen Wellenberg aufweist.

3. Dampfsieb (8) nach Anspruch 1 oder 2,
wobei der Siebmantel (9) im Querschnitt gesehen sternförmig ausgebildet ist.

4. Dampfsieb (8) nach Anspruch 3,
wobei der sternförmige Siebmantel (9) einen Wellenberg (14) im Einströmbereich (10) aufweist.

5. Dampfsieb (8) nach Anspruch 4,
wobei in einer Umfangsrichtung (13) des Siebmantels (9) gesehen zumindest sechs Wellenberge ausgebildet sind.

6. Dampfsieb (8) nach einem der vorhergehenden Ansprüche,
wobei der Siebmantel (9) aus einzelnen Segmenten ausgebildet.

7. Dampfsieb (8) nach Anspruch 6,
wobei die Segmente (22) im Wesentlichen T-förmig ausgebildet sind und in Umfangsrichtung (13) angeordnet werden.

8. Dampfsieb (8) nach Anspruch 7,
wobei das Segment (22) eine Grundseite (23) und ein T-Bein (24) aufweist und die Segmente (22) derart angeordnet werden, dass das T-Bein (24) der jeweiligen Segmente abwechselnd in eine alternierende Richtung zeigen.

9. Dampfsieb (8) nach Anspruch 8,
wobei der in den Grundseiten (23) eine Bohrung (26) ausgeführt ist, durch die ein Verbindungselement angeordnet ist.

10. Dampfsieb (8) nach Anspruch 9,
wobei das Verbindungselement eine Stange (29) ist.

11. Dampfsieb (8) nach Anspruch 10,
wobei der Siebmantel (9) durch eine Grundplatte (30) und eine Abschlussplatte (31) gehalten ist, wobei das Verbindungselement mit der Abschlussplatte (31) und der Grundplatte fest verbunden ist.

12. Verfahren zur Herstellung eines Dampfsiebes (8) nach einem der Ansprüche 1 bis 11,
wobei der Siebmantel durch die Additive-Manufacturing-Methode hergestellt wird.
